Europäisches Patentamt

(19) European Patent Office

Office européen des brevets

(11) Publication number: **0 021 539**
**B1**

(12) **EUROPEAN PATENT SPECIFICATION**

(45) Date of publication of patent specification: 04.05.83

(51) Int. Cl.³: **F 15 B 17/00, F 15 B 7/10, B 23 Q 7/04**

(21) Application number: 80200594.2

(22) Date of filing: 20.06.80

(54) **Apparatus for the transfer of workpieces on machine tools.**

(30) Priority: 21.06.79 NL 7904850

(43) Date of publication of application:
07.01.81 Bulletin 81/1

(45) Publication of the grant of the patent:
04.05.83 Bulletin 83/18

(84) Designated Contracting States:
BE CH DE GB IT LI NL

(56) References cited:
DE - A - 1 527 033
DE - A - 2 458 958
DE - A - 2 460 338
DE - A - 2 636 473
DE - B - 1 102 574
GB - A - 927 267
NL - A - 7 710 016
US - A - 1 933 226
US - A - 2 731 952
US - A - 3 091 256

(73) Proprietor: NEDSCHROEF OCTROOI
MAATSCHAPPIJ N.V.
Kanaaldijk NW 71
NL-5707 LC Helmond (NL)

(72) Inventor: van de Meerendonk, Gerardus Cornelis
Caroluslaan 35
Helmond (NL)

(74) Representative: Kooy, Leendert Willem et al,
OCTROOIBUREAU VRIESENDORP & GAADE P.O.
Box 266
NL-2501 AW The Hague (NL)

Courier Press, Leamington Spa, England.

Apparatus for the transfer or work pieces on machine tools

The present invention relates to an apparatus for the transfer of work-pieces on machine tools from one working station to the next one, said apparatus consisting of a reciprocably movable carriage, of a plurality of gripper units mounted on the carriage, each gripper unit being provided with a hydraulic cylinder, and of a plurality of feed regulators each of which is connected on the one hand to one of said hydraulic cylinders and on the other hand to a main feed line of a hydraulic installation, which feed regulators are operable by adjustable cams mounted on a rotary shaft.

Such an apparatus is known from NL—A—77 10016. In said known apparatus the hydraulic cylinders for the gripper units are formed as double-acting cylinders, where the cylinders of the gripper units each have to be connected to the main feed line by means of two lines, one line thereof being direct and one line via the feed regulators, serving to feed the hydraulic liquid to close the gripper units. The feed regulators are control valves or servo-valves connecting the hydraulic cylinders to a main feed line and a bleed line respectively. In said known apparatus, each time when opening and closing the gripper jaws, a quantity of hydraulic liquid has to be fed to each cylinder and returned from each cylinder to the reservoir, which implies losses in pressure and which needs energy. The arrangement and connections of the hydraulic cylinders of the gripper units in the known apparatus do moreover imply a certain inertia in operation.

The present invention tends to abolish the disadvantages of the known apparatus.

This object is achieved in that according to the invention the hydraulic cylinders are single-acting and spring-biassed, the feed regulators are piston pumps each of which comprises a cylinder and a piston operable by one of said cams, and each piston pump is provided with a spring biassed, pilot controlled non-return valve arranged between the main feed line and the working space of the piston pump so as to prevent fluid flow from the main feed line to the working space and operable by the piston during the last portion of its active stroke and thereby connecting the main feed line with the working space.

In the apparatus according to the invention each feed regulator comprises a movable piston and a non-return valve, the piston being moved directly by the pertaining control cam and serving for opening and closing the gripper units, as the cylinder space of the feed regulator, in which said piston of the piston pump operates, is continuously connected to the hydraulic cylinder, so that the pressure medium is forced from the feed regulator to the cylinder and vice versa. There the feed regulators also serve as a reservoir for the pressure medium from the hydraulic control cylinders of the gripper units. The non-return valve is moved somewhat by the piston of the piston pump at the end of its forward movement, so that the valve housing, which is connected directly to the main feed line of the hydraulic installation, is connected directly to the cylinder space of the first piston, thus effecting the clamping force of the gripper jaws, for which only a minimal movement of the non-return valve is necessary. In the apparatus according to the invention the gripper units can be quickly opened and closed, as the feed regulators do themselves receive the pressure medium from the hydraulic cylinders of the gripper units, and because these are close to the cylinders the distance to be covered by the pressure medium is small. As furthermore, in order to effect the clamping force for the gripper jaws, only a minimal movement of the non-return valve is necessary said clamping force is quickly effected and the apparatus is suitable for use in very fast running machines.

In the known transfer apparatus for work-pieces to be machined on machine tools a manually operable control valve is provided to simultaneously open all gripper units when there is a disturbance at one of the working stations. This control valve is adapted to shut off the main feed line from the servo-valves. The disadvantage thereof is that in the event of a disturbance in one of the working stations the transfer apparatus has to be switched off by means of the manually controlled valves. As a disturbance may also be caused by a wrong machining of a workpiece this manually controlled valve needs, a particularly great attention and a quick reaction of the operator, whereas the operation will not always be reliable.

With the apparatus according to the invention in which a control valve is provided to simultaneously open all gripper units, the control valve consists of an electromagnetic control valve which is electrically connected to micro switches which, in the event of a disturbance at one of the working stations, are adapted to send a signal to the control valve, the control valve is hydraulically connected on the one hand to the main feed line and on the other hand to at least one hydraulic piston-cylinder unit, mounted in a common housing together with the piston pumps and a mechanical actuating device is provided to bring the common housing with the pistons of the piston pumps beyond the path of movement of the cams on the rotatable shaft, when the piston-cylinder unit is not activated.

By the above it is achieved that in the event of a disturbance elsewhere in the machine the piston pumps will all be simultaneously freed from the actuating cams so that the gripper units are immediately and all simultaneously opened without the cam shaft needing to be stopped first. This prevents further damage of machine parts. According to the invention a considerable reliability and quick reaction is achieved when releasing the piston pumps from the cam shaft.

In a preferred embodiment of the apparatus according to the invention the common housing is pivotable about a shaft on the frame of the apparatus and is provided with a pressure wedge slidable by the hydraulic piston-cylinder unit, said pressure wedge being adapted to cooperate with a fixed wedge on the frame, so that in the event of an activated piston-cylinder unit the housing with the pistons of the piston pumps is pressed against the cams and in the common housing a spring biassed pressure pin is mounted, which is arranged opposite the fixed wedge at the other side of the pivot shaft and the slidable pressure wedge is provided with a return spring so that when the piston-cylinder unit is not activated the return spring is adapted to retract the pressure wedge and the spring biassed pressure pin is adapted to move the housing with the pistons of the piston pumps away from the cams.

By using said features one does not only realise a reliable and quickly acting switch-off device for the transfer apparatus but also a robust and reliable embodiment thereof.

The invention will now be further elucidated with some embodiments thereof, on the basis of the drawings.

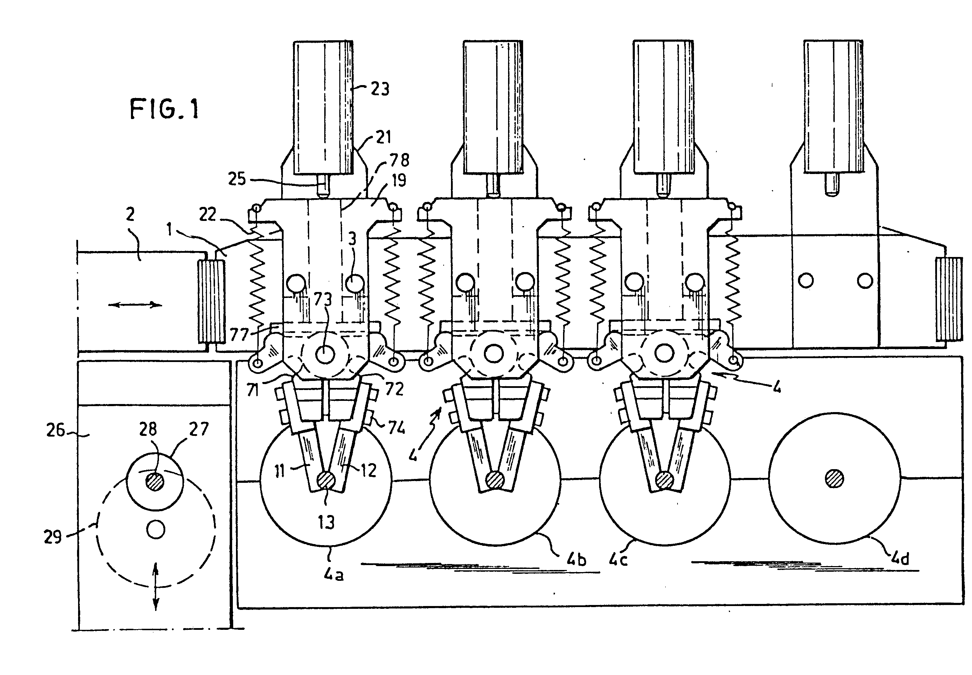

Figure 1 is a schematic front view of the reciprocably movable carriage with the gripper units, in which one gripper unit is dismantled.

Figure 2 is a schematically drawn longitudinal cross section at a larger scale of two gripper units one in the open and one in the closed condition.

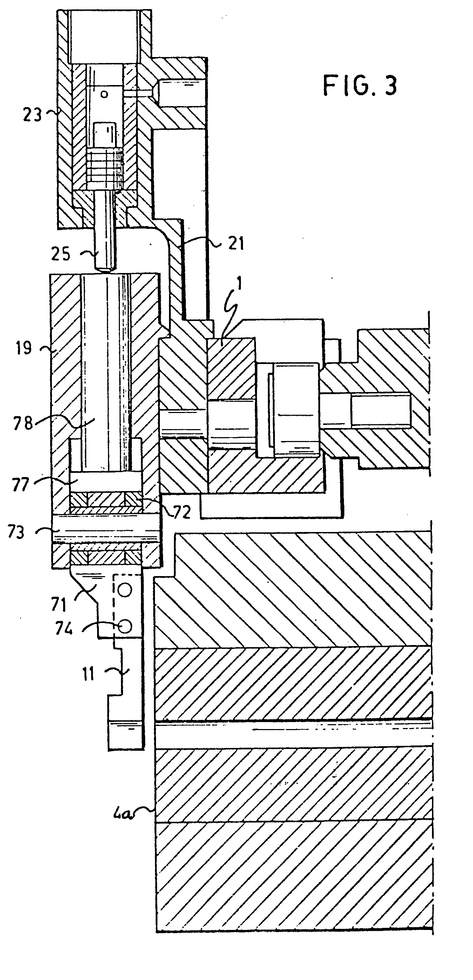

Figure 3 is a cross section according to the line III—III in Figure 2.

Figure 4 is a partial plan view and a partial longitudinal cross-section of the feed regulators with the pertaining control cams.

Figure 5 is a cross section of the feed regulator with pertaining control cam and the mechanism to release the feed regulator from the cam.

Figure 6 is a cross section according to the line VI—VI in Figure 5.

Figure 7 is a cross section of the feed regulator with pertaining control cam in the position in which feed regulator is free from the cam.

Figure 8 is a cross section according to the line VIII—VIII in Figure 7.

Figure 9 is a longitudinal cross section at a large scale of one feed regulator with the non-return valve and the piston of the piston pump in the rearmost position.

Figure 10 is a longitudinal cross section at a larger scale of one feed regulator with the non-return valve and the piston of the piston pump in the foremost position.

Figure 11 is a scheme of the hydraulic installation of the apparatus.

On the carriage 1, reciprocating by means of a lever 2, a number of gripper units 4 are arranged with the aid of connecting screws 3, the number of gripper units corresponding with the number of working stations that the machine has, in which the apparatus according to the invention is used. In the drawn embodiment four working stations 4a—4d are used.

The gripper units 4 bring the work-piece 13 from one to the other working station, wherein the work-piece 13 is made of a piece of material 28, cut-off and fed respectively by a cutter carriage 26 and a cutter knife 27 mounted therein, said piece of material being fed into the apparatus via the feed tube 29.

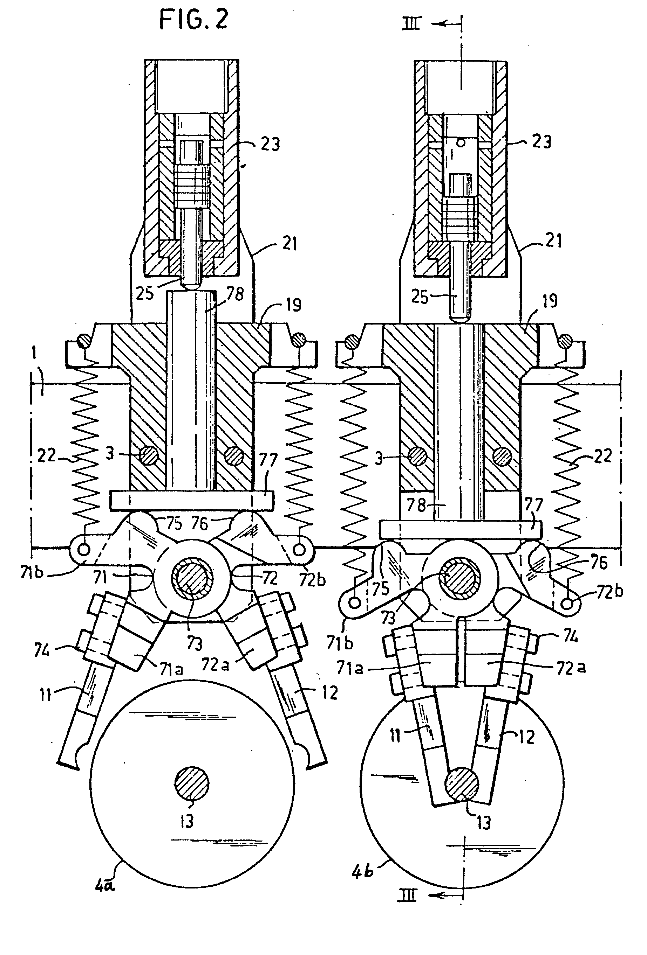

Each gripper unit 4 is provided with a pair of gripper levers 71 and 72 with two arms (Figure 2) which are pivotable about a common pivot shaft 73. In the arms 71a and 72a of the gripper levers the gripper jaws 11 and 12 respectively are provided which are fixed therein by means of screws 74, said gripper jaws serving to clamp the work-piece 13.

The arms 71b and 72b of the gripper levers are provided with round cams 75 and 76 respectively, affected by a pressing piece 77 which is upwardly and downwardly slidable in a holder 19 with the aid of a pin 78, secured thereto, said holder being connected to the carriage 1 by means of screws 3. The tension springs 22 on the holder 19 and the arms 71b and 72b of the gripper levers 71 and 72 respectively, tend to keep them always in the open position according to Figure 2.

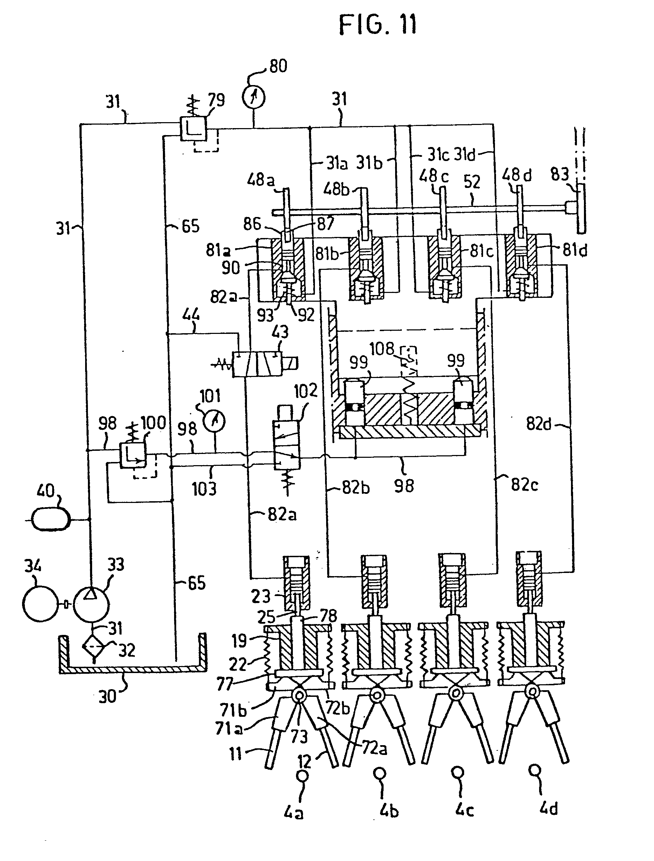

Above each holder a single acting hydraulic cylinder 23 is mounted with the aid of supports 21 on the carriage 1, the piston rod 25 of said cylinder cooperating with the pin 78 of the pressing piece 77. The cylinders 23 are controlled from a hydraulic installation which will be further elucidated on the basis of the scheme according to Figure 11.

The hydraulic installation according to Figure 11 is provided with an oil reservoir 30 in which a main feed line 31 debouches. In the line 31 in the oil reservoir 30 a filter 32 is provided to filter the hydraulic pressure medium, which is suck in by a pump 33 driven by a motor 34, and is forced further into the hydraulic installation. Furthermore an accumulator 40 is mounted in the main feed line 31, said accumulator taking care of the fact that there is always sufficient pressurized fluid in the line, as well as a pressure control valve 79, to adjust the necessary pressure for the hydraulic cylinders 23, which pressure can be read on a manometer 80. A return line 65 is connected to the pressure control valve 79, said line debouching in the reservoir 30 and serving to return the superfluously fed pressurized fluid.

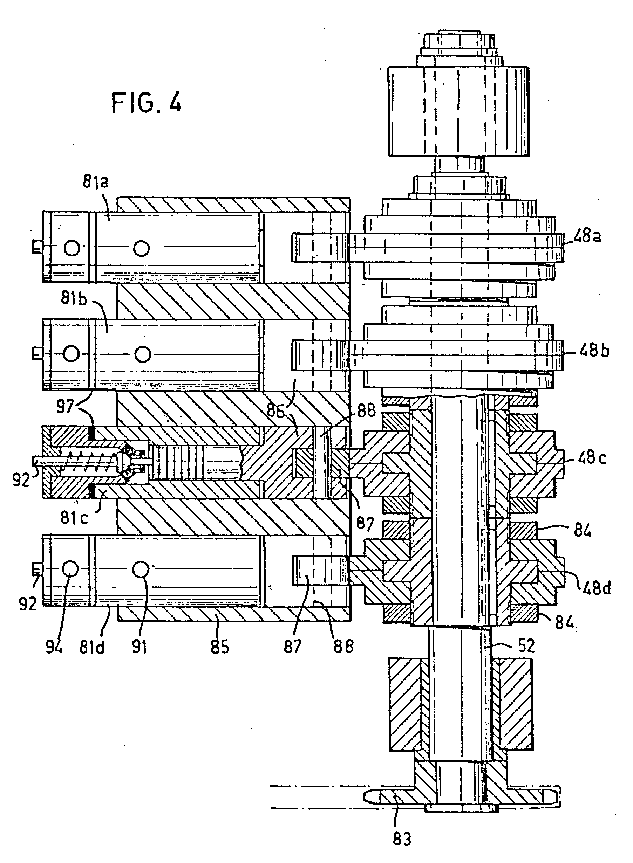

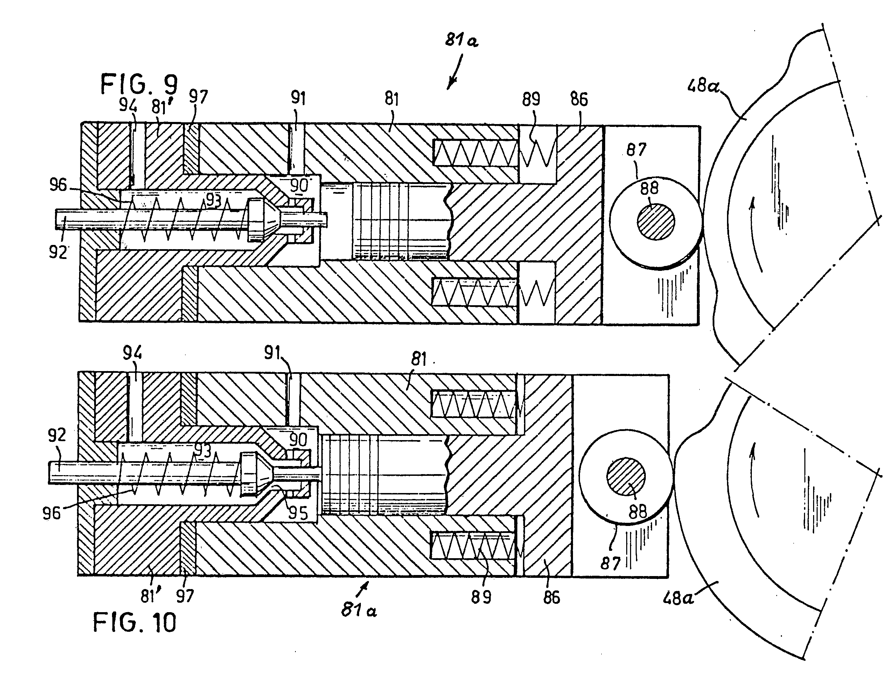

From the pressure control valve 79 the main feed line 31 then extends with the branches 31a—31d to the feed regulators 81a—81d which in their turn are connected to the hydraulic cylinders 23 by means of the lines 82a—82d. The feed regulators 81a—81d can be switched over by cams 48a—48d, mounted on a common shaft 52, the driving thereof being derived from the main crank shaft of the machine by means of the drive wheel 83. The cams 48a—48d are individually adjustable on the shaft 52 with the aid of nuts 84 (Figure 4), so that the time at which the feed regulators 81a—81d are switched over can be adjusted individually and as a consequence thereof also the time at which the gripper jaws 11 and 12 are opened and closed. The feed regulators 81a—81d are mounted in a common holder or housing 85 and in each regulator a piston pump comprising a reciprocally movable piston 86 within a cylinder 81, and a spring biassed, pilot controlled non-return valve 92 are mounted. At one end the pump piston 86 is in the configuration of a fork, in which a cam roller 87 is mounted with the aid of a bearing pin 88 and which cam roller cooperates with the cams 48, and compression springs 89 (Figure 9—10) takes care of the fact that the cam roller 87 will not cease from running on the cam 48.

The pump cylinder space 90 in the regulators 81a—81d (Figure 9—10) in which the pump piston 86 is movable, is connected to the cylinders 23 via a connection 91 and a line 82, so that the hydraulic fluid is forced to the cylinder 23 at the forward movement of the pump piston, i.e. when the volume of the cylinder space 90 becomes smaller, because of which the piston pin 25 in the cylinder will force the pressing piece 77 downwardly via the pin 78, as a consequence of which the gripper jaws 11 and 12 are closed. If then the pump piston 86 performs the return stroke and thereby the space 90 becomes greater, the fluid can flow back again from the cylinder 23 into the cylinder space 90. This is effected by the influence of the tension springs 22 which, as a consequence of the drop of pressure in the cylinders 23 due to the increase in volume of the cylinder space 90, draw the gripper levers 71 and 72 in the opened position, by which the pressing piece 77 with the pin 78 is forced upwardly, which pin then forces the piston pin 25 upwardly as well, by which the pressure medium is forced from the cylinders 23 into the cylinder space 90.

At the end of the forward stroke of the pump piston 86 it contacts the non-return valve 92 in the chamber 93 of the regulator 81a—81d, said chamber being constantly connected, via a connection 94, to the main feed line 31 for the hydraulic fluid. By the pressure of the pump piston 86 against the non-return valve 92 the latter is moved to the left over a small distance, i.e. 0.1 to 0.2 mm (Figure 9—10) by which the port 95 in the regulator 81a—81d is opened and a connection is realised between the chambers 90 and 93. Because of this the pressure, constantly prevailing in the feed line 31 and in the chamber 93, will now also prevail in the chamber 90 and from there, via the line 82, also in the cylinders 23. Hereby the piston pin 25 will strongly force the pressing piece 77 downwardly, so that the product 13 is tightly clamped by the gripper jaws 11 and 12. If then the pump piston 86 makes the return stroke to the right the port 95 is immediately closed by the non-return valve 92, caused by the compression spring 96 mounted on the non-return valve 92. Hereby the pressure in the cylinder chamber 90 drops again and the gripper jaws 11 and 12 are opened again.

The extent up to which the port 95 is opened by the non-return valve 92 depends upon the distance at which the latter is moved to the left during the contact with the pump piston 86 by said piston. As, in order to create a pressure in a chamber which is already filled with pressurized fluid only a small opening is necessary, a forward movement of the non-return valve 92 to the left over a distance of 0.1 to 0.2 mm is already sufficient. The thickness of a filler plate 97, which is exchangeably arranged between the parts 81 and 81' of the feed regulator 81a—81d is decisive for said distance. It appears from Figure 9 and 10 that the thinner the filler plate 97 is, the farther the non-return valve 92 is forced to the left by the piston 96 and also the thicker the filler plate is, the less far the non-return valve 92 will move to the left.

In order to release them the cam rolls 87 from the cams 48, by which the feed regulators 81a—81d are rendered inoperable a branch line 98 is provided in the feed line 31 for one pair of single acting hydraulic cylinders 99, arranged in the common housing 85 of the feed regulators 81a—81d. In the branch line 98, in addition to a pressure control valve 100 to adjust the necessary pressure and a manometer 101 to read the adjusted pressure, also a switch valve in the configuration of an electromagnetic control valve 102 is provided, with which pressurized fluid can be admitted or not to the cylinders 99, whereas for the discharge the valve 102 is connected to the return line 65 by means of a line 103.

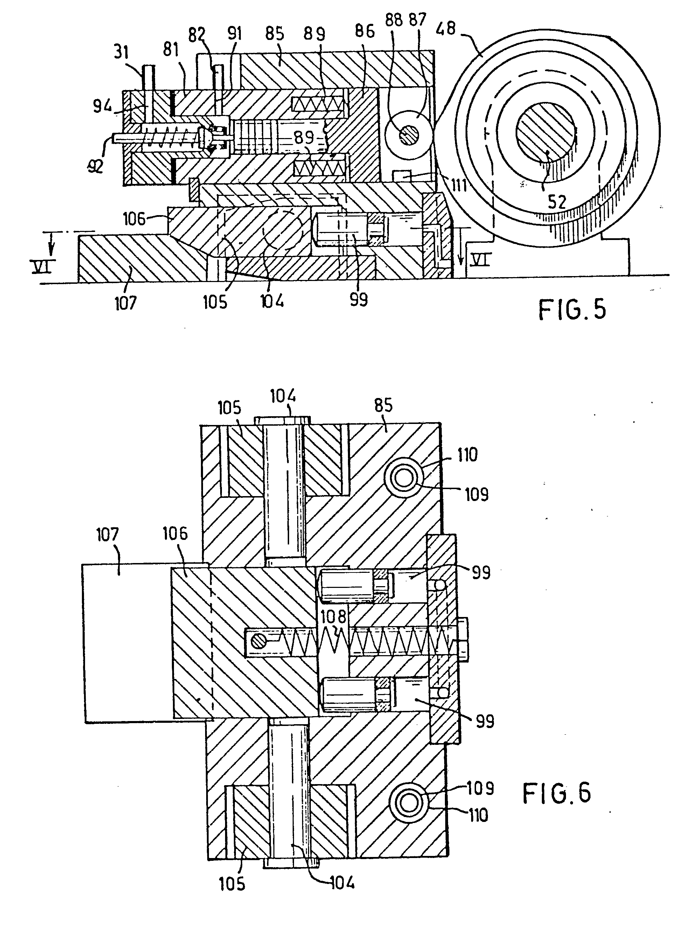

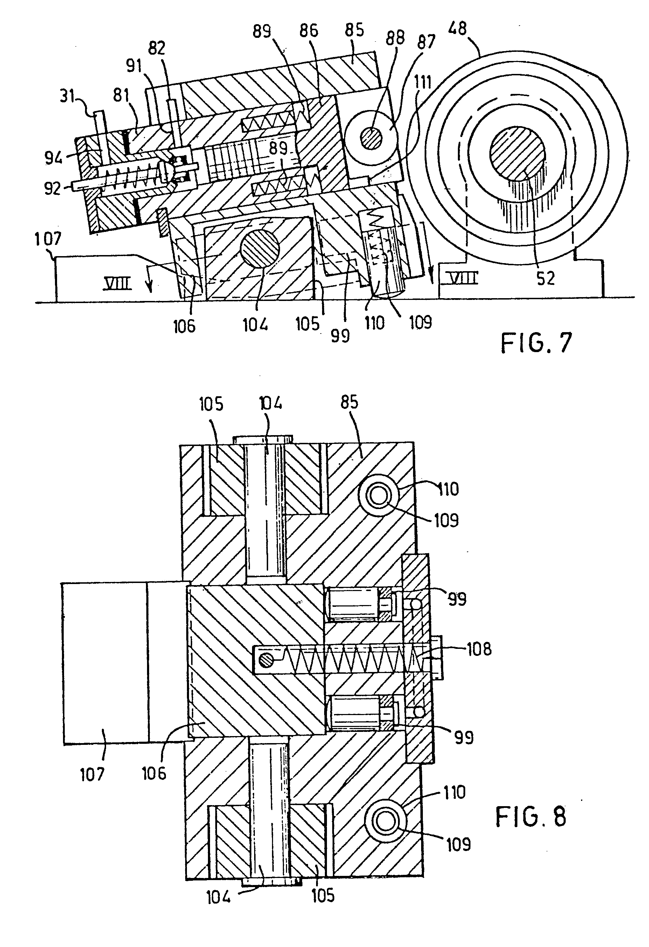

The common housing 85 for the feed regulators 81a—81d is tiltable or pivotable about shafts 104 (Figure 5 and 7), which are fixedly mounted in fixed bearing blocks 105, which in their turn are fixedly connected to the frame of the machine. In the housing 85 furthermore a pressure wedge 106 is arranged, which is movable by pistons in the cylinders 99, and which is slidable in the housing 85 and cooperates with a wedge 107 fixedly mounted on the frame of the machine. In the event of a normally operating apparatus the cylinders 99 are always activated, by which the pressure wedge 106 forces the housing 85 in a position according to Figure 5 in which the cam rollers 87 run continuously on the cams 48.

At the various working stations of the machine micro switches, not drawn, are arranged which in the event of a wrong machining of the workpiece in one of the working stations or in the event of another disturbance in the machine, are adapted to send a signal to the electromagnetic valve 102. If such a disturbance occurs the electromagnetic control valve 102 is automatically switched over by the signal by which the pressure in the cylinders 99 drops, because then they are connected to the return line 65 via the valve 102 and a line 103. Because of this a tension spring 108 will retract the pressure wedge 106, by which it is released from the fixed wedge 107. In the housing 85 also pressure pins 110 with compression springs 109 are mounted, which are adapted to tilt the holder 85 about the shafts 104, so that the position according to Figure 7 is reached. In this position the cam rollers 87 are free from the cams 48 and the cams 48 are freely rotating whereas the pump pistons 86 in the feed regulators 81 remain in the set-back position by the action of compression springs 89 and thereby the gripper units 4 remain in the opened position.

As, when adjusting the tools the pair of gripper jaws of the first working station 4a must be adapted to be opened individually, a manually operable valve 43 is built in the line 82a of the regulator 81a to the hydraulic cylinder 23. The line 82a can be short-circuited with said valve 43, because of which the cylinder 23 of the first working station 4a communicates with the return line 60 via the line 44, by which the pressure in the cylinder 23 drops and the pair of gripper jaws opens.

The operation of the above described apparatus is as follows. When the apparatus is in operation the valve chamber 93 of the feed regulators 81a—81d is in continuous connection with the main feed line 31 so that in said valve chamber also the same pressure prevails continuously as the pressure which is adjusted with the pressure control valve 79. The value of said pressure is determined by the force which is necessary to clamp the work-piece 13 by the gripper jaws 11 and 12.

Furthermore the cylinder space 90 of the feed regulators 89 is continuously connected to the pressure side of the cylinders 23 via the line 82, and the valve chamber 93 as well as the cylinders 23 are continuously filled with the used hydraulic fluid.

If the pump piston 86 of the feed regulators is moved forwardly by the pertaining cam 48 at the correct moment, the cylinder space 90, in which the pump piston 86 is slidable, will be given a smaller volume because of which the fluid is forced from said cylinder space via the line 82a—82d to the cylinder 23 as a con-.sequence of which the pertaining piston pin 25 is forced downwardly and thereby also the pin 78 with the pressing piece 77. Hereby the pressing piece 77 will cause the gripper levers 71 and 72 respectively to rotate about the shaft 73 by means of the round cams 75 and 76, by which the levers will go from the open position into the closed position (Figure 2), in which position the work-piece 13 is clamped then. Then, at the end of its forward movement, the pump piston 86 contacts the non-return valve 92 in the feed regulators 81 and the non-return valve is moved to the left over a small distance in Figure 9, by which the port 95 which forms the connection between the cylinder space 90 and the valve chamber 93 in the regulator 81a—81d, is opened and thereby the pressure, continuously prevailing in the valve chamber 93, will propagate via the line 82 to the pressure side of the cylinder 23. Because of this the piston pin 25 will press the pressing piece 77 via the pin 78 strongly on the closed gripper levers 71 and 72, so that the product 13 is tightly clamped by the gripper jaws 11 and 12. When the carriage 1 is displaced then, the clamped workpiece 13 is brought to the next working station to be subject to the next machining.

At the moment the work-piece 13 has arrived there and is positioned in the pertaining die, the cam 48 makes sure that the pump piston 86 can perform the return stroke by means of the compression springs 89. Upon the start of said return stroke the pump piston 86 is released from the non-return valve 92 again by which it closes the port 95 again by means of the compression spring 96, so that the pressure in the cylinder space 90 as well as in the line 82 and in the cylinders 23 drops because of the increase of the volume of the cylinder space as a consequence of the return movement of the pump piston 86. Because of the pressure drop the tension springs 22 will draw the gripper levers 71 and 72 again in the opened position by which the work-piece is released and adapted to be subjected to a further machining, while the carriage 1 performs the return movement then.

By turning one or more cams 48 on the shaft 52 relative to the other cams, which may be done after unscrewing the nuts 84 (Figure 4), the time at which each gripper unit is opened and closed, can be individually adjusted.

It is also possible to dismount one or more gripper units, if these are not used, by unscrewing the screws 3, with which the gripper units are secured to the carriage 1. The hydraulic lines need not be uncoupled for this purpose.

If there is a disturbance somewhere in the machine, a provision is made to open all gripper units simultaneously and to render them inoperable.

In such an event the electromagnetic control valve 102 is switched over by means of a signal, emitted by one or more micro switches arranged at the various working stations of the machine, so that the pressure, constantly prevailing in the hydraulic cylinders 99 in the event of a normally operating machine, can drop via the line 103 connected to the return line 65 (Figure 11). Thereby the tension spring 108 will retract the pressure wedge 106 so that it is released from the fixed wedge 107 (Figure 7). As a consequence thereof the compression springs 109 will cause the housing 85 with the feed regulators 81a—81d to tilt or pivot about the shafts 104 by means of the pins 110 in the position according to Figure 7. In this position the cam rollers 87 are free from the cams 48 by which the pump pistons 86, because of the action of the compression springs 89 will have assumed the most retracted position, defined by stops 111. As already described above the gripper units will take the opened position in said most retracted position of the pump pistons 86. Then they remain in this position so long, until the cylinders 99 receive pressurized fluid again by which the housing 85 will arrive in the position according to Figure 5 again.

## Claims

1. Apparatus for the transfer of workpieces (13) on machine tools from one working station (4a—4c) to the next one (4b—4d), said apparatus consisting of a reciprocably movable carriage (1), of a plurality of gripper units (4) mounted on the carriage (1), each gripper unit being provided with a hydraulic cylinder (23), and of a plurality of feed regulators (81a—81d) each of which is connected on the one hand to one of said hydraulic cylinders (23) and on the other hand to a main feed line (31) of a hydraulic installation, which feed regulators (81a—81d) are operable by adjustable cams (48a—48d) mounted on a rotary shaft (52), characterized in that the hydraulic cylinders (23) are single-acting and spring biassed, that the feed regulators (81a—81d) are piston pumps each of which comprises a cylinder (81) and a piston (86) operable by one of said cams (48a—48d), and that each piston pump is provided with a spring biassed, pilot controlled non-return valve (92) arranged between the main feed line (31) and the working space (90) of the piston pump so as to prevent fluid flow from the main feed line to the working space and operable by the piston (86) during the last portion of its active stroke and thereby connecting the main feed line (31) with the working space (90).

2. Apparatus according to claim 1, in which a control valve (102) is provided to simultaneously open all gripper units (4), characterized in that the control valve consists of an electromagnetic control valve (102) which is electrically connected to micro switches which, in the event of a disturbance at one of the working stations (4a—4d) are adapted to send a signal to the control valve (102), that the control valve is hydraulically connected on the one hand to the main feed line (31) and on the other hand to at least one hydraulic piston-cylinder unit (99), mounted in a common housing (85) together with the piston pumps (81a—81d) and that a mechanical actuating device (104—110) is provided to bring the common housing (5) with the pistons (86) of the piston pumps beyond the path of movement of the cams (48a—48d) on the rotatable shaft (52), when the piston-cylinder unit (99) is not activated.

3. Apparatus according to claim 2, characterized in that the common housing (85) is pivotable about a shaft (104) on the frame of the apparatus and is provided with a pressure wedge (106) slidable by the hydraulic piston-cylinder unit (99), said pressure wedge being adapted to cooperate with a fixed wedge (107) on the frame, so that in the event of an activated piston-cylinder unit (99) the housing (85) with the pistons (86) of the piston pumps (81a—81d) is pressed against the cams (48a—48d) and that in the common housing (85) a spring biassed pressure pin (109, 110) is mounted, which is arranged opposite the fixed wedge (107) at the other side of the pivot shaft (104) and that the slidable pressure wedge (106) is provided with a return spring (108) so that when the piston-cylinder unit (99) is not activated the return spring (109) is adapted to retract the pressure wedge (106) and the spring biassed pressure pin (109, 110) is adapted to move the housing (85) with the pistons (86) of the piston pumps (81a—81d) away from the cams (48a—48d).

4. Apparatus according to claim 1, characterized in that the working space (90) of each piston pump (81a—81d) receives the back-flowing pressurized fluid from the single acting hydraulic cylinder (23) when a gripper unit (4) opens and that the pressurized fluid is forced by the piston (86) from the working space (90) to the single-acting hydraulic cylinder (23) in the event of a closing gripper unit (4).

## Patentansprüche

1. Apparat zum Ueberführen von Werkstücken (13) auf Werkzeugmaschinen von einer Bearbeitungsstation (4a—4c) zur nächsten (4b—4d), welcher Apparat aus einem hin und her bewegbaren Wagen (1) besteht, ferner aus einer Mehrzahl, auf dem Wagen (1) montierten Greifereinheiten (4), wobei jede Greifereinheit mit einem Hydraulikzylinder (23) versehen ist, und aus einer Mehrzahl von Zuführreglern (81a—81d), von denen jeder einerseits mit einem der Hydraulikzylinder (23) und anderseits mit einer Zuführ-Hauptleitung (31) einer hydraulischen Anlage verbunden ist, wobei die Zuführregler (81a—81d) mittels auf einer drehenden Welle (52) montierten, einstellbaren Kurvenscheiben (48a—48d) betätigbar sind, dadurch gekennzeichnet, dass die Hydraulikzylinder (23) einfachwirkend und federnd vorgespannt sind, dass die Zuführregler (81a—81d) als Kolbenpumpen ausgebildet sind, von denen jede einen Zylinder (81) und einen von einer der Kurvenscheiben (48a—48d) betätigbaren Kolben (86) aufweist, und dass jede Kolbenpumpe mit einem federnd vorgespannten, ferngesteuerten und zwischen der Zuführ-Hauptleitung (31) und dem Arbeitsraum (90) der Kolbenpumpe angeordneten Rückschlagventil (92) versehen ist, das eine Strömung zwischen der Zuführ-Hauptleitung zum Arbeitsraum verhindert und das durch den Kolben (86) im letzten Teil seines Arbeitshubes betätigbar ist, um dadurch die Zuführ-Hauptleitung (31) mit dem Arbeitsraum (90) zu verbinden.

2. Apparat nach Anspruch 1, bei dem zum gleichzeitigen Oeffnen aller Greifereinheiten (4) ein Steuerventil (102) vorgesehen ist, dadurch gekennzeichnet, dass das Steuerventil aus einem elektromagnetischen Steuerventil (102) besteht, das elektrisch mit Mikroschaltern verbunden ist, die dazu eingerichtet sind, bei einer Störung an einer der Bearbeitungsstationen (4a—4d) ein Signal an das Steuerventil (102) zu senden, dass das Steuerventil einerseits mit der Zuführ-Hauptleitung (31) und andererseits mit mindestens einer hydraulischen Kolben-Zylindereinheit (99) hydraulisch verbunden ist, welche zusammen mit den Kolbenpumpen (81a—81d) in einem gemeinsamen Gehäuse (85) montiert ist, und dass eine mechanische Betätigungsvorrichtung (104—110) vorgesehen ist, um das gemeinsame Gehäuse (85) mit den Kolben (86) der Kolbenpumpen über die Umlaufbahn der Kurvenscheiben (48a—48d) auf der drehbaren Welle (52) hinaus zu bewegen, wenn die Kolben-Zylindereinheit (99) unbeaufschlagt ist.

3. Apparat nach Anspruch 2, dadurch gekennzeichnet, dass das gemeinsame Gehäuse (85) um eine Schwenkwelle (104) am Rahmen des Apparates verschwenkbar und mit einem Druckkeil (106) versehen ist, der durch die hydraulische Kolben-Zylindereinheit (99) verschiebbar ist, wobei der Druckkeil mit einem am Rahmen befestigten Keil (107) zusammenwirkt, so dass bei beaufschlagter Kolben-Zylindereinheit (99) das Gehäuse (85) mit den Kolben (86) der Kolbenpumpen (81a—81d) gegen die Kurvenscheiben (48a—48d) gedrängt werden, und dass im gemeinsamen Gehäuse (85) dem festen Keil (107) gegenüberliegend und auf der anderen Seite der Schwenkwelle (104) ein federnd vorgespannter Stift (109, 110) montiert ist, und dass der verschiebbare Druckkeil (106) mit einer Rückholfeder (108) versehen ist, so dass bei unbeaufschlagter Kolben-Zylinder-Einheit (99) die Rückholfeder (108) den Druckkeil (106) zurückzieht und der federnd vorgespannte Stift (109, 110) das Gehäuse (85) mit den Kolben (86) der Kolbenpumpen (81a—81d) von den Kurvenscheiben (48a—48d) weg bewegt.

4. Apparat nach Anspruch 1, dadurch gekennzeichnet, dass der Arbeitsraum (90) jeder Kolbenpumpe (81a—81d) den Rücklauf von Druckflüssigkeit aus den einfach wirkenden Hydraulikzylinder (23) aufnimmt, wenn eine Greifereinheit (4) sich öffnet, und dass die Druckflüssigkeit durch den Kolben (86) aus dem Arbeitsraum (90) in den einfach wirkenden Hydraulikzylinder (23) bei einer Schliessung der Greifereinheit (4) verdrängt wird.

## Revendications

1. Appareil pour le transfert de pièces à usiner (13) d'une station de travail (4a—4c) à la prochaine station (4b—4d) sur des machines-outils, l'appareil comprenant un chariot (1) apte à faire des mouvements de va-et-vient, un nombre de dispositifs grappins (4) montés sur le chariot (1), chaque dispositif grappin étant muni d'un cylindre hydraulique (23); et un nombre de régulateurs d'amenée (81a—81d) dont chacun est relié, d'une part, à une des dits cylindres (23) et, d'autre part, à une conduite d'alimentation principale (31) d'une installation hydraulique, les dits régulateurs d'amenée (81a—81d) étant mis en action par des cames adjustables (48a—48d) montées sur un arbre rotatif (52), caractérisé en ce que les cylindres hydrauliques (23) sont à action simple et chargés par un ressort, que les régulateurs d'amenée (81a—81d) sont des pompes à piston dont chacune comprend un cylindre (81) et un piston (86) mis en action par une des dites cames (48a—48d), et que chaque pompe à piston est pourvue d'un clapet de non-retour (92) chargé d'un ressort et commandé à distance, inséré entre la conduite d'alimentation principale (31) et l'espace de travail (90) de la pompe à piston, de façon à empêcher l'entrée du fluide de la conduite d'alimentation principale dans l'espace de travail mais pouvant être actionné par le piston (86) au cours de la dernière partie de sa course active, en faisant alors la connection entre la conduite d'alimentation principale (31) et l'espace de travail (90).

2. Appareil selon la revendication 1 comprenant en outre une vanne-pilote de contrôle (102) pour ouvrir simultanément tous les dispositifs grappins (4), caractérisé en ce que la vanne-pilote est une vanne électromagnétique (102) reliée électriquement à des microrupteurs qui, lorsqu'une panne se produit à une des stations de travail (4a—4d), sont agencés pour envoyer un signal à la vanne-pilote (102), que la vanne-pilote est reliée hydrauliquement à la conduite principale d'alimentation (31), d'une part, et à au moins un ensemble piston-cylindre hydrauliques (99), d'autre part, monté dans un boîtier commun (85) avec les pompes à piston (81a—81d), et qu'un dispositif d'actionnement mécanique (104—110) est prévu pour déplacer le boîtier commun (85) avec les pistons (86) des pompes à piston au-delà du champ de mouvement des cames (48a—48d) sur l'arbre rotatif (52) lorsque l'ensemble piston-cylindre (99) n'est pas en activité.

3. Appareil selon la revendication 2, caractérisé en ce que le boîtier commun (85) est monté de façon à pivoter autour d'un arbre (104) sur le cadre de l'appareil, et il comprend un coin presseur (106) entraîné pour colissement par l'ensemble piston-cylindre hydrauliques (99), le dit coin presseur étant agencé pour coopérer avec un coin fixe (107) sur le cadre de façon que, si l'ensemble piston-cylindre (99) entre en action, le boîtier (85) comportant les pistons (86) des pompes à piston (81a—81d) est pressé contre les cames (48a—48d), et qu'un goujon presseur (109, 110) chargé d'un ressort est monté dans le boîtier commun (85) à une endroit opposé au coin (107) à l'autre côté de l'arbre pivot (104), et que le coin presseur coulissant (106) comporte un ressort de rappel (108), de façon que, lorsque l'ensemble piston-cylindre (99) n'est pas en action, le ressort de rappel (108) retire le coin presseur (106), et le goujon presseur (109, 110) retire le boîtier (85) avec les pistons (86) des pompes à piston (81a—81d) de leur contact avec les cames (48a—48d).

4. Appareil selon la revendication 1, caractérisé en ce que l'espace de travail (90) de chaque pompe à piston (81a—81d) reçoit le fluide sous pression refluant du cylindre hydraulique à action simple (23) lorsqu'un dispositif grappin (4) s'ouvre, et que le fluide sous pression est poussé par le piston (86) de l'espace de travail (90) vers le cylindre hydraulique à action simple (23) lors de la fermeture d'un dispositif grappin (4).

FIG.1

# FIG. 2

FIG. 3

# FIG. 4

FIG.5

FIG.6

0 021 539

FIG. 7

FIG. 8

6

FIG. 9

FIG. 10

0021 539

FIG. 11

0 021 539